(19) Europäisches Patentamt / European Patent Office / Office européen des brevets

(11) **EP 1 905 139 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(21) Anmeldenummer: **06764022.7**

(22) Anmeldetag: **03.07.2006**

(51) Int Cl.:
*H01S 3/067* (2006.01)       *H04B 10/17* (2006.01)

(86) Internationale Anmeldenummer:
**PCT/EP2006/063812**

(87) Internationale Veröffentlichungsnummer:
**WO 2007/006679 (18.01.2007 Gazette 2007/03)**

(54) **MEHRSTUFIGER FASERVERSTÄRKER UND VERFAHREN ZUR ANPASSUNG EINER PUMPLEISTUNG EINES MEHRSTUFIGEN FASERVERSTÄRKERS**

MULTISTAGE FIBRE AMPLIFIER AND METHOD FOR ADAPTING A PUMP POWER OF A MULTISTAGE FIBRE AMPLIFIER

AMPLIFICATEUR A FIBRES A PLUSIEURS ETAGES ET PROCEDE POUR ADAPTER UNE PUISSANCE DE POMPAGE D'UN TEL AMPLIFICATEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.07.2005 DE 102005031897**
**30.09.2005 DE 102005046936**

(43) Veröffentlichungstag der Anmeldung:
**02.04.2008 Patentblatt 2008/14**

(73) Patentinhaber: **Nokia Siemens Networks GmbH & Co. KG**
**81541 München (DE)**

(72) Erfinder: **RAPP, Lutz**
**82041 Deisenhofen (DE)**

(74) Vertreter: **Weidel, Gottfried et al**
**Nokia Siemens Networks GmbH & Co. KG**
**Patentabteilung**
**Postfach 80 17 60**
**81617 München (DE)**

(56) Entgegenhaltungen:
**EP-A- 0 932 228       US-A1- 2003 081 892**

**Beschreibung**

Die Erfindung betrifft einen mehrstufigen Faserverstärker nach dem Oberbegriff des Patentanspruchs 1 und ein Verfahren zur Anpassung einer Pumpleistung eines mehrstufigen Faserverstärkers nach dem Oberbegriff des Patentanspruchs 9.

In optischen Weitverkehrsnetzen werden zur Signalverstärkung üblicherweise optische Faserverstärker verwendet, deren Verstärkungsfasern zumeist mit einem aus der Gruppe der Seltenen Erden stammendem Element dotiert sind. Kommerziell werden überwiegend mit Erbium dotierte Faserverstärker (engl. "Erbium doped fiber amplifiers", abgekürzt EDFAs) eingesetzt.; welche in der Regel aus mehreren Verstärkerstufen bestehen. Als Verstärkerstufe wird im Folgenden jeweils ein Teil eines EDFAs bezeichnet, der genau eine zusammenhängende mit Erbium dotierte Faser enthält, die zwischen passiven Komponenten wie beispielsweise variablen Dämpfungsgliedern, dispersionskompensierenden Fasern oder Isolatoren angeordnet ist.

In der Literatur existieren vielfache Anordnungen, um mehrstufige mit Erbium dotierte Faserverstärker zu pumpen. Das Pumpsignal propagiert dabei entweder ko- oder kontradirektional zum optischen Übertragungssignal. Zur Energiezufuhr wurden bisher in der Regel pro Verstärkerstufe eine oder auch mehrere Pumplaserdioden eingesetzt. In zweistufigen Faserverstärkern werden auch Pumplaserdioden unterschiedlicher Wellenlänge als Pumpquellen verwendet. Ein Pumplaser mit einer Emissionswellenlänge von 980 nm sorgt beispielsweise für eine hohe Inversion am Faseranfang der ersten Stufe, während ein Laser mit einer Emissionswellenlänge von 1480 nm die zweite Verstärkerstufe hinter einem Isolator mit Energie versorgt. Dadurch kann innerhalb eines sehr großen Eingangsleistungsbereichs eine gute Rauschzahl bei ausreichender Ausgangsleistung erzielt werden.

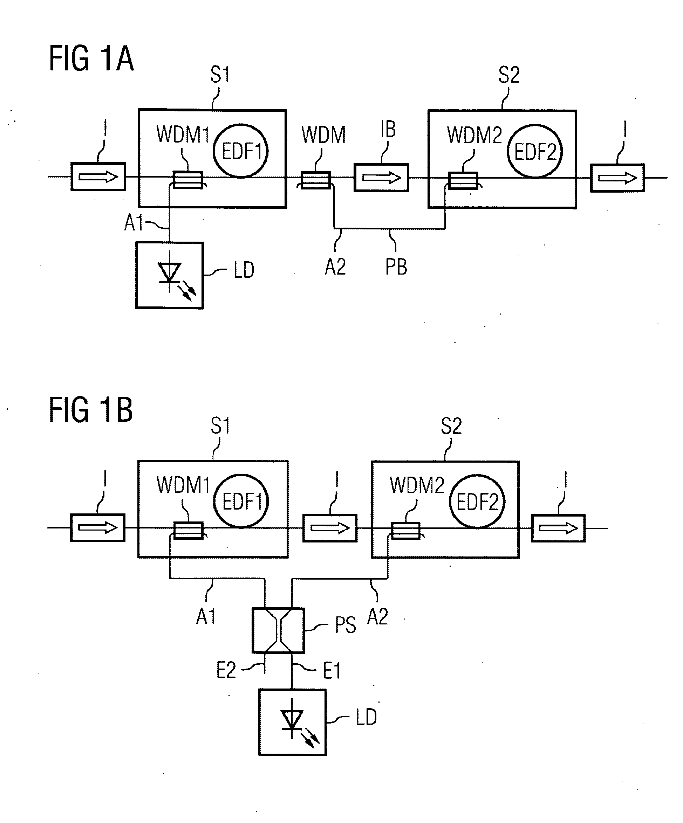

Zur Kostenersparnis ist es wünschenswert, nur noch eine Pumplaserdiode als Pumpquelle zu verwenden, um mehrstufige Faserverstärker zu pumpen. Dies wurde unter anderem durch den enormen Fortschritt bei den erzielbaren Ausgangsleistungen von Laserdioden möglich. Pumplaserdioden mit bis zu 500 mW sind bereits kommerziell erhältlich. Grundsätzlich werden zwei Pumpanordnungen unterschieden, mit denen die Pumpleistung einer Laserdiode auf beispielsweise zwei Verstärkerstufen verteilt wird. In Fig. 1a) und b) sind Ausführungsbeispiele solcher Pumpanordnungen dargestellt. In diesem Zusammenhang wird auf das US-Patent 5 430 572 verwiesen.

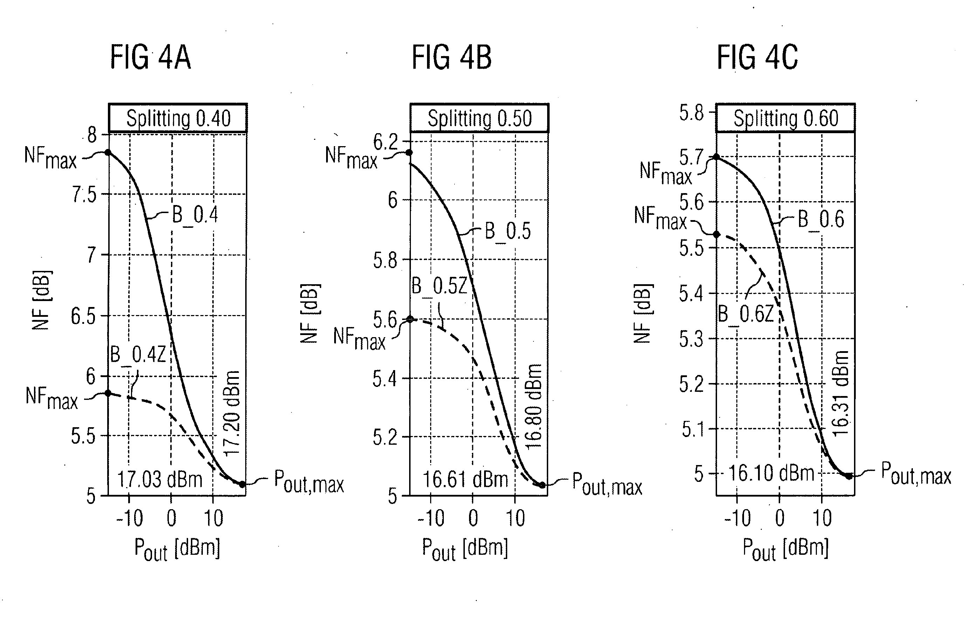

Fig. 1a zeigt eine bekannte Pumpanordnung eines zweistufigen optischen Faserverstärkers mit Pumpbypass, die als Blockschaltbild dargestellt ist. Ein optisches Datensignal einer Wellenlänge um 1550 nm wird eingangsseitig über einen Isolator I einem ersten Eingang eines wellenlängenselektiven Kopplers WDM1 zugeführt. Der zweite Eingang des Kopplers WDM1 entspricht dem Pumpeingang und ist mit dem Ausgang einer Laserdiode LD mit beispielsweise einer Emissionswellenlänge von 980 nm verbunden. Das emittierte Pumpsignal A1 und das optische Übertragungssignal werden anschließend einer ersten mit Erbium dotierten Verstärkungsfaser EDF1 zugeführt, wo das Übertragungssignal verstärkt und ein Teil des Pumpsignals absorbiert wird. Das verstärkte Übertragungssignal wird über einen Koppler WDM, über einen weiteren Isolator IB, der zwischen der ersten Verstärkerstufe S1 und der zweiten Verstärkerstufe S2 angeordnet ist, und über einen Koppler WDM2 einer zweiten mit Erbium dotierten Verstärkungsfaser EDF2 zugeführt. Ein zweiter Ausgang des wellenlängenselektiven Kopplers WDM ist mit dem zweiten Eingang des Kopplers WDM2 verbunden. Mittels dieses Pumpbypasses PB wird das in der ersten Verstärkerstufe S1 nicht absorbierte Pumpsignal A2 ausgekoppelt und hinter dem Isolator IB in die zweite Verstärkerstufe S2 wieder eingekoppelt. Der Pumpbypass ist aufgrund der hohen Absorption des Pumpsignals im Isolator IB erforderlich. Aus dem US-Patent 5 430 572, Fig. 4 ist eine prinzipiell gleiche Anordnung bekannt, bei der das Pumpsignal kontradirektional zum Übertragungssignal propagiert. Dabei wird das Pumpsignal einer Laserdiode über einen wellenlängenselektiven Koppler eingekoppelt, der hinter der zweiten Verstärkungsfaser angeordnet ist.

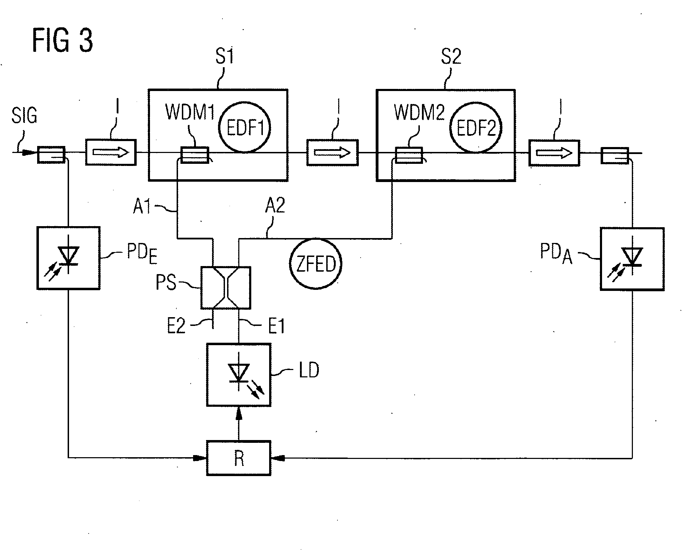

Im Blockschaltbild von Fig. 1b ist eine Pumpanordnung mit Pumpsplitter dargestellt. Hierbei wird das Pumpsignal einer Laserdiode LD den Verstärkerstufen S1 und S2 über einen Pumpsplitter PS zugeführt. Der Pumpsplitter besitzt in der Regel zwei Eingänge zu Zuführung der Signale E1 und E2 und zwei Ausgänge und teilt in Abhängigkeit von einem fest eingestellten Teilungsverhältnis $(1-\alpha)$: $\alpha$ die Leistung des von der Laserdiode emittierten Pumpsignals auf beide Verstärkerstufen S1 und S2 auf. In der europäischen Patentanmeldung 0 650 234 A1, Fig. 3 ist ebenfalls eine solche Anordnung angegeben. Gemäß Fig. 1b dieser Anmeldung ist ein erster Ausgang des Pumpsplitters PS mit einem wellenlängenselektiven Koppler WDM1 der ersten Verstärkerstufe S1 verbunden. Der zweite Ausgang des Pumpsplitters PS ist mit einem weiteren Koppler WDM2 verbunden, der zu Beginn der zweiten Stufe S2 angeordnet ist. Auf diese Weise wird ein erstes Pumpsignal A1 der ersten Verstärkungsfaser EDF1 zugeführt und ein weiteres Pumpsignal A2 der weiteren Verstärkungsfaser EDF2 zugeführt. Mit diesem Aufbau lassen sich im Vergleich zum Aufbau aus Fig. 1a höhere Ausgangsleistungen erzielen. Das Teilungsverhältnis des Leistungskopplers stellt hierbei einen wichtigen Freiheitsgrad dar, der eine Optimierung der Verstärkerfunktion zulässt. Allerdings ist es von Nachteil, dass das Teilungsverhältnis des Pumpsplitters PS üblicherweise in der Design-Phase des Verstärkers festgelegt wird und nicht während des Betriebs an die Eingangsleistung respektive die gewünschte Ausgangsleistung angepasst werden kann.

Neben der gewünschten Signalverstärkung infolge von stimulierter Emission weisen optische Verstärker ein breitbandiges Rauschen in Form der verstärkten spontanen Emission (engl. "amplified spontaneous emission", abgekürzt ASE) auf, das zur Reduktion des Signal-zu-Rauschverhältnisses führt. Um eine möglichst kleine Rauschzahl (engl. "noise figure", abgekürzt NF) am Ausgang eines mehrstufigen EDFAs zu erreichen, sollte die Summensignalleistung am Ausgang (im Folgenden als Ausgangsleistung bezeichnet) der einzelnen Verstärkerstufen möglichst groß sein. Gleichzeitig sollte aber - insbesondere im Falle von Verstärkern für sehr lange Übertragungsstrecken - die Rauschzahl der ersten Stufe möglichst gering sein, da bei mehrstufigen Faserverstärkern in erster Linie die Rauschzahl der ersten Stufe das Rauschverhalten der Gesamtanordnung bestimmt. Das Rauschverhalten sowie die maximale Ausgangsleistung eines mehrstufigen Faserverstärkers hängen im Allgemeinen von der Summensignalleistung am Eingang des Verstärkers (im Folgenden als Eingangsleistung bezeichnet), und der Pumpleistung der einzelnen Stufen ab.

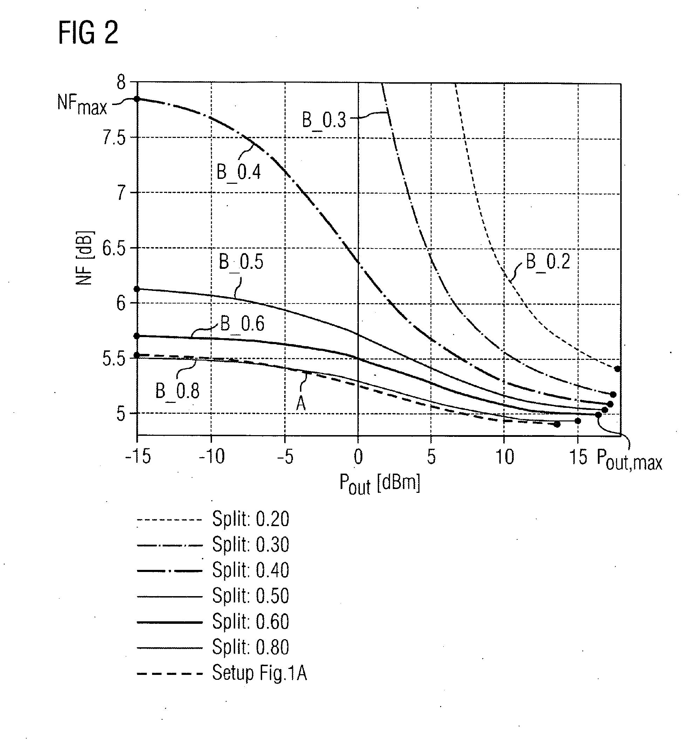

In Fig. 2 ist der Verlauf der Raüschzahl NF (angegeben in dB) als Funktion der Ausgangsleistung $P_{out}$ (angegeben in dBm) für unterschiedliche Teilungsverhältnisse des Pumpsplitters PS aus der zweistufigen Verstärkeranordnung von Fig. 1b dargestellt. Auch für die Pumpanordnung aus Fig. 1a ist die Abhängigkeit der Raüschzahl NF von der Ausgangsleistung $P_{out}$ gezeigt. Es wird davon ausgegangen, dass die von der Laserdiode LD emittierte Pumpleistung auf ca. 250 mW begrenzt ist. Ferner wird der Gewinn der betrachteten Verstärkerstufen durch eine geeignete Pumpleistungsregelung konstant gehalten und beträgt annähernd 20 dB. Aufgrund des konstanten Gewinns besteht ein linearer Zusammenhang zwischen der Eingangs -und Ausgangsleistung. Die Eingangsleistung wurde derart berechnet, dass über die spektrale Breite von 40 Kanälen eine Summeneingangsleistung eingestellt wurde, die in der Regel der eines einzelnen Kanals entspricht. Diese derart gewählte Summeneingangsleistung wird in den Simulationen variiert. In der Praxis wird eine Variation der Eingangsleistung. entweder durch eine unterschiedliche Kanalbelegung oder durch Leistungsänderungen der Signale eines oder mehrerer Kanäle erreicht. Während Kurve A das Rauschverhalten für die Pumpanordnung mit Pumpbypass aus Fig. 1a zeigt, wird anhand der Kurven B_0.2 bis B_0.8 der starke Einfluss der Aufteilung der Pumpleistung auf die erste und zweite Verstärkerstufe für die Pumpanordnung mit Pumpsplitter aus Fig. 1b deutlich. Für die Kurven B_0.2 bis B_0.8 nimmt das Teilungsverhältnis ausgehend von 0,2 bis auf 0,8 zu, d.h. das in die erste Erbiumfaser eingekoppelte Pumpsignal A1 steigt an. Es ist deutlich zu erkennen, dass die Rauschzahl für kleine Ausgangsleistungen und aufgrund des konstanten Gewinns auch für kleine Eingangsleistungen sehr groß ist und mit zunehmender Ausgangsleistung stetig abnimmt, wenn das in die erste Verstärkerstufe eingekoppelten Pumpsignal A1 erhöht wird. Allerdings wird auch deutlich, dass dadurch die *maximal* erzielbare Ausgangsleistung $P_{out,, max}$ um mehrere dBm

abnimmt. Die *maximal* erzielbare Ausgangsleistung $P_{out, max}$ für einen geforderten Gewinnwert ist dadurch gekennzeichnet, dass der Verstärkergewinn noch nicht im Bereich der Sättigung liegt. Im Hinblick auf Übertragungssysteme sind die *maximal* erzielbare Ausgangsleistung $P_{out, max}$ und die *maximal* auftretende Rauschzahl $NF_{max}$ als Kenngrößen eines Faserverstärkers von Bedeutung, wenn eine bestimmte Eingangssignalleistung und eine bestimmte Pumpleistung vorgegeben sind.

Moderne WDM-Systeme für kommerzielle Anwendungen können mit bis zu 160 Kanälen auf den entsprechenden Wellenlängen betrieben werden; in Betrieb genommen werden sie aber in der Regel mit einigen wenigen Kanälen. Zum Zeitpunkt der Inbetriebnahme ist daher die Eingangsleistung (bei konstantem Gewinn auch die Ausgangsleistung) am Eingang eines Faserverstärkers recht gering, während später deutlich größere Eingangsleistungen austreten können. Die Übertragungsstrecke muss aber so ausgelegt werden, dass die erforderlichen Anforderungen an die Signalqualität insbesondere in Bezug auf das Signal-Rausch-Verhältnis in einem großen Leistungsbereich erfüllt werden.

Ändert sich die Eingangsleistung am Eingang eines Faserverstärkers beim Zu- oder Abschalten von Kanälen, so ist es erforderlich, die dynamischen Eigenschaften des Faserverstärkers anzupassen. So treten beispielsweise bei einem Abfall der Signaleingangsleistung von 16 dB am Eingang eines mehrstufigen Verstärkers erhebliche Gewinnschwankungen des zu verstärkenden Signals auf. Um Bitfehler am Ende der Übertragungsstrecke zu verhindern, sollte sich jedoch der Signalgewinn beim Zu- oder Abschalten von Kanälen nicht ändern.

Es ist die Aufgabe der vorliegenden Erfindung, einen mehrstufigen Faserverstärker anzugeben, mit dem über einen variierenden Eingangsleistungsbereich verbesserte Rauschzahlen erreicht werden.

Es ist eine weitere Aufgabe der vorliegenden Erfindung, die dynamischen Eigenschaften dieses mehrstufigen Faserverstärkers zu verbessern.

Diese Aufgaben werden durch einen mehrstufigen Faserverstärker mit den Merkmalen des Patentanspruchs 1, durch ein Verfahren zur Anpassung einer Pumpleistung eines mehrstufigen Faserverstärkers mit den Merkmalen des Patentanspruchs 9 und durch einen mehrstufigen Faserverstärker mit den Merkmalen des Patentanspruchs 13 gelöst.

Es wird ein mehrstufiger Faserverstärker gemäß Anspruch 1 angegeben.

Durch das Einfügen des leistungsabhängigen Dämpfungsgliedes in den Pumppfad zwischen Pumpquelle und einer oder mehreren Verstärkungsfasern, die der ersten Verstärkungsfaser des mehrstufigen Verstärkers nachgeschaltet sind, wird das Aufteilungsverhältnis der Pumpleistung auf die einzelnen Verstärkerstufen variiert. Dadurch werden deutliche Verbesserungen hinsichtlich des Rauschverhaltens der Gesamtanordnung erreicht. Dies gilt insbesondere für Eingangssignale mit geringer Summeneingangsleistung, was immer dann vorliegt, wenn nur wenige Kanäle belegt sind.

In einer vorteilhaften Ausführungsvariante nach Anspruch 2 ist der mehrstufige Verstärker mit einer Pumpanordnung mit Pumpbypass ausgelegt. Das Restpumpsignal wird als weiteres Pumpsignal über das leistungsabhängige Dämpfungsglied der weiteren Verstärkungsfaser zugeführt, was zu einer deutlichen Verbesserung der Verstärker-Funktion hinsichtlich der Rauschzahl führt.

In einer weiteren vorteilhaften Ausführungsvariante nach Anspruch 3 ist der mehrstufige Verstärker mit einer Pumpanordnung mit Pumpsplitter versehen. Das weitere Pumpsignal wird hier über das leistungsabhängige Dämpfungsglied der weiteren Verstärkungsfaser zugeführt. Insbesondere für diese Anordnung ergeben sich signifikante Verbesserungen hinsichtlich der Rauschzahl.

Durch die Verwendung einer mit Erbium dotierten Faser als leistungsabhängiges Dämpfungsglied (im Folgenden auch als mit Erbium dotierte Zusatzfaser bezeichnet) werden vorteilhaft geringe Einfügedämpfungen erreicht, insbesondere wenn durch die Wahl des Kerndurchmessers die Modenfelddurchmesser der Zusatzfaser an sonst verwendete Standard-Fasern angepasst ist. Zusätzlich sind Rauschverhalten und Ausgangsleistung am Ausgang des mehrstufigen Faserverstärkers vorteilhaft durch die Länge der Zusatzfaser einstellbar. Darüber hinaus handelt es sich beim Einsatz der erfindungsgemäßen Zusatzfaser im Pumppfad um eine äußerst kostengünstige Realisierung eines Dämpfungsglieds mit leistungsabhängiger Dämpfung.

Es wird ferner ein Verfahren zur Anpassung einer Pumpleistung des erfindungsgemäßen mehrstufigen Faserverstärkers mit Zusatzfaser mit leistungsabhängiger Dämpfung im weiteren Pumppfad angegeben, in dem eine Regelung verwendet wird, die nach einer am Verstärkereingang detektierten Änderung der Eingangsleistung des Signals einen neuen Sollwert des Pumpsignals berechnet und einstellt, so dass der Gewinn des Signals möglichst konstant bleibt. Erfindungsgemäß wird bei dem Verfahren nach einer Leistungsänderung des Signals ein aktueller Leistungswert des Pumpsignals schlagartig bis über oder unter seinen neuen Sollwert hinaus geändert und dann asymptotisch dem neuen Sollwert des Pumpsignals angenähert. Dies bedeutet, dass die erfindungsgemäße modifizierte Feedforward-Regelung die Pumpleistung bei einem Abfall der Eingangssignalleistung zunächst auf einen niedrigeren Wert einstellt, als es für die Aufrechterhaltung eines eingeschwungenen stabilen Zustands notwendig wäre. Durch diese anfängliche Überkompensation der Pumpleistung werden vorteilhaft die durch die Zusatzfaser bedingten Verzögerungen auf die Änderungen der Eingangssignalleistung ausgeglichen und die Zeit bis zum Erreichen des eingeschwungenen Zustands wird überbrückt. Die Gewinnschwankungen des Signals werden dadurch vorteilhaft reduziert.

Weitere vorteilhafte Ausgestaltungen der Erfindung sind in den Unteransprüchen gegeben.

Die Erfindung wird nun anhand von Ausführungsbeispielen näher beschrieben. Dabei zeigen:

Fig. 3          ein Blockschaltbild gemäß Fig. 1b mit der erfindungsgemäßen Zusatzfaser im Pumppfad für das weitere Pumpsignal A2

Fig. 4 a)-c)   Graphen zur Verdeutlichung der Abhängigkeit der Rauschzahl der Gesamtanordnung von der Summenausgangsleistung für die Anordnung aus Fig. 3 für vorgegebene Teilungsverhältnisse des Pumpsplitters mit und ohne die erfindungsgemäße Zusatzfaser

Fig. 5          einen Graph zur Verdeutlichung der Abhängigkeit der Rauschzahl der Gesamtanordnung von der Summenausgangsleistung für die Anordnung aus Fig. 3 für vorgegebene Teilungsverhältnisse des Pumpsplitters und unterschiedliche Längen der Zusatzfaser

Fig. 6          ein Blockschaltbild einer Ausführungsvariante der erfindungsgemäßen Pumpanordnung

Fig. 7          ein Blockschaltbild einer weiteren Ausführungsvariante der erfindungsgemäßen Pumpanordnung

Fig. 8          einen Graph zur Verdeutlichung der Abhängigkeit des Signalgewinns $G_{SIG}$ der Gesamtanordnung des Verstärkers für unterschiedliche Längen der Zusatzfaser

Fig. 9          ein Flussdiagramm zur Verdeutlichung der erfindungsgemäßen Feedforward-Regelung

Fig. 10a        einen Graph der Gesamtpumpleistung in Abhängigkeit von der Zeit für die erfindungsgemäße Feedforward-Regelung

Fig. 10b        einen Graph des Signalgewinns in Abhängigkeit von der Zeit für unterschiedliche Längen der Zusatzfaser

Das in Fig. 3 gezeigte Blockschaltbild entspricht prinzipiell dem in Fig. 1b gezeigten Blockschaltbild eines zweistufigen Faserverstärkers mit Pumpsplitter, in dem das zugeführte optische Signal SIG verstärkt wird. Das Ausgangssignal einer Laserdiode LD, deren Emissionswellenlänge beispielsweise 980 nm beträgt, wird dem Pumpsplitter PS zugeführt, wo das Gesamtpumpsignal entsprechend einem vorgegebenen Teilungsverhältnis aufgeteilt wird. Ein erster Anteil A1 des Gesamtpumpsignals respektive ein erstes Pumpsignal wird über einen Pumpeingang eines ersten wellenlängenselektiven Kopplers WDM1 einer ersten Verstärkungsfaser EDF1 zugeführt. Ein weiterer Pumpleistungsanteil A2 wird über eine zusätzlich in den Pumppfad eingefügten und mit Erbium dotierten Faser ZFED einem Pumpeingang eines zweiten Kopplers WDM2 der zweiten Verstärkungsfaser EDF2 zugeführt. Der abgebildete zweistufige Faserverstärker ist an eine Regelung R angeschlossen. Es kann sich dabei beispielsweise um eine Gewinn- oder Ausgangsleistungsregelung handeln. Zu Regelungszwecken sind sowohl eingangsseitig als auch ausgangsseitig des zweistufigen Faserverstärkers Photodioden $PD_E$ und $PD_A$ angeordnet, die mit einer Regelungseinheit R verbunden sind. Die Regelung R bestimmt die von der Laserdiode LD emittierte Pumpleistung.

Mit der mit Erbium dotierten Zusatzfaser ZFED wird das der zweiten Verstärkerstufe S2 zugeführte Pumpsignal A2 leistungsabhängig abgedämpft. Kleine Pumpsignale werden stärker absorbiert und damit zusätzlich abgedämpft. Große Pumpsignale werden aufgrund von Absorptionssättigungseffekten in der Faser weniger stark absorbiert und somit weniger abgedämpft. Durch die Abdämpfung der in die zweite Verstärkerstufe S2 eingekoppelten Pumpleistung nimmt die Ausgangsleistung am Ausgang der zweiten Stufe ebenfalls ab. Bei Betrieb mit konstantem Gewinn gleicht jedoch die Regelung diesen Zusatzverlust durch entsprechende Erhöhung der von der Laserdiode LD abgegebenen Pumpleistung aus, so dass der Gewinn unverändert bleibt. Durch die Erhöhung dieser Pumpleistung wird auch die erste Verstärkerstufe S1 stärker gepumpt, was sich positiv auf die Rauschzahl auswirkt. Die Abschwächung der Pumpleistung in der Zusatzfaser nimmt dadurch ebenfalls ab, wodurch aber ein gewünschter Wert der Ausgangsleistung des Faserverstärkers aufrechterhalten wird und sich ein stabiler Zustand einstellt.

Die Variation der Dämpfung der Pumpleistung in der Zusatzfaser und die entsprechende Regelung der Pumpleistung bewirken effektiv eine Variation der Aufteilung der Pumpleistung auf die einzelnen Verstärkerstufen. Insbesondere bei kleinen Pump- und Signaleingangsleistungen wird die Pumpleistung zu Gunsten der ersten Stufe erhöht, was eine signifikante Auswirkung auf die Rauschzahl am Ausgang des zweistufigen Verstärkers hat, wie in Fig. 4 dargestellt ist. Statt der mit Erbium dotierten Zusatzfaser kann auch eine mit einem anderen Element aus der Gruppe der Seltenen Erden dotierte Faser verwendet werden, sofern sie ein vergleichbares Absorptionsverhalten im gewünschten Wellenlängenbereich aufweist. Auch der Einsatz von anderen Hardwarekomponenten, mit denen eine leistungsabhängige Dämpfung erzielt wird, oder ein entsprechend gesteuertes Dämpfungsglied ist denkbar.

In den Figuren 4a bis 4c ist jeweils die Rauschzahl am Ausgang des zweistufigen Verstärkers als Funktion der Ausgangsleistung für die Teilungsverhältnisse 0,4:0,6 ; 0,5:0,5 und 0,6:0,4 des Pumpsplitters PS aus Fig. 3 angegeben. Der Gewinn ist in allen Fällen konstant. Die gestrichelten Kurvenverläufe stellen jeweils die Rauschzahl unter Verwendung der erfindungsgemäßen Zusatzfaser dar. Die durchgezogenen Kurven stellen die Rauschzahl ohne Verwendung der Zusatzfaser dar und stimmen mit den Kurvenverläufen B_0.4, B_0.5 und B_0.6 aus Fig. 2 überein. In Fig. 4a beträgt der Pumpleistungsanteil, welcher der ersten Verstärkungsfaser zugeführt wird, 40 %. Da die Rauschzahl von der ersten Verstärkerstufe bestimmt wird und diese im Vergleich zur zweiten Stufe hier weniger stark gepumpt wird, sind die Rauschzahlen der Kurve B_0.4, bei der keine Zusatzfaser im zweiten Pumppfad verwendet wird, im Vergleich zu den Kurven B_0.5 und B_0.6 aus Fig. 4b und 4c größer. Die Verwendung der erfindungsgemäßen Zusatzfaser im zweiten Pumppfad hingegen stellt für alle Teilungsverhältnisse eine deutliche Verbesserung des Rauschverhaltens dar. Die Rauschzahlen der Kurven B_0.4Z, B_0.5Z und B_0.6Z liegen für alle Teilungsverhältnisse unterhalb der Kurven B_0.4, B_0.5 und B_0.6. Für einen gewünschten Wert der Ausgangsleistung ist durch die erfindungsgemäße Zusatzfaser in jedem Fall eine kleinere Rauschzahl gewährleistet. Zusätzlich bleibt die maximale Ausgangsleistung $P_{out, max}$ annähernd gleich.

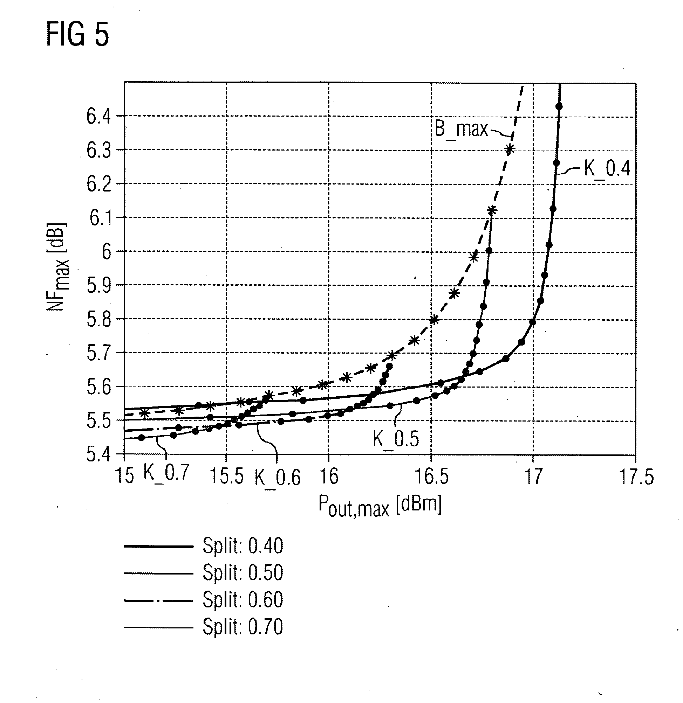

In Fig. 5 wurden Wertepaare (mit Stern eingezeichnet) bestehend aus den genannten Kenngrößen ($P_{out, maxt}$ $NF_{max}$) für zahlreiche Teilungsverhältnisse des Pumpsplitters PS aus Fig. 1b bzw. Fig. 3 und 4 aufgetragen. Der Pumpleistungsanteil A1, welcher der ersten Verstärkungsfaser zugeführt wird, nimmt dabei von links nach rechts ab. Die Wertepaare wurden zunächst ohne Verwendung der erfindungsgemäßen Zusatzfaser in der Pumpanordnung ermittelt. Eine Verbindung der einzelnen Wertepaare ergibt die schwarz eingezeichnete Kurve B_MAX, welche monoton ansteigend ist, da mit geringer werdendem Pumpleistungsanteil A1 in der ersten Stufe die Rauschzahl am Ausgang der zweiten Stufe monoton ansteigt. Im Fall der grau eingezeichneten Kurven wurde jeweils ein festes Teilungsverhältnis des Pumpsplitters PS zugrunde gelegt und die Länge der Zusatzfaser ausgehend von 0 m in Schritten von 0,5 m auf 10 m erhöht. Auf diese Weise ergeben sich die Kurven K_0.4 bis K_0.7. Am Beispiel der Kurve K_0.5 wird der Einfluss der Länge der mit Erbium dotierten Zusatzfaser beschrieben. Ohne Zusatzfaser beläuft sich die maximal auftretende Rauschzahl auf 6.1 dB und es ist eine maximale Ausgangsleistung von ca. 16.8 dB erzielbar. Durch Einfügen der Zusatzfaser nimmt die Rauschzahl zunächst deutlich ab, während sich die maximale Ausgangsleistung kaum verändert. Bei Längen der Zusatzfaser größer als 5.0 m führt eine Erhöhung der Faserlänge hingegen zu keiner nennenswerten Verbesserung der Rauschzahl, während die maximale Ausgangsleistung nun stark abnimmt. Bei geeigneter Wahl der Länge der Zusatzfaser lässt sich so eine Reduktion der maximal auftretenden Rauschzahl um ca. 0.4 dB erzielen, während die maximale Ausgangsleistung nur um ca. 0.1 dB abnimmt. Die Länge der mit Erbium dotierten Zusatzfaser stellt damit neben dem Teilungsverhältnis des Pumpsplitters ein wichtiges Mittel zur Optimierung der beiden Kenngrößen ($P_{out, max}$, $NF_{max}$) dar.

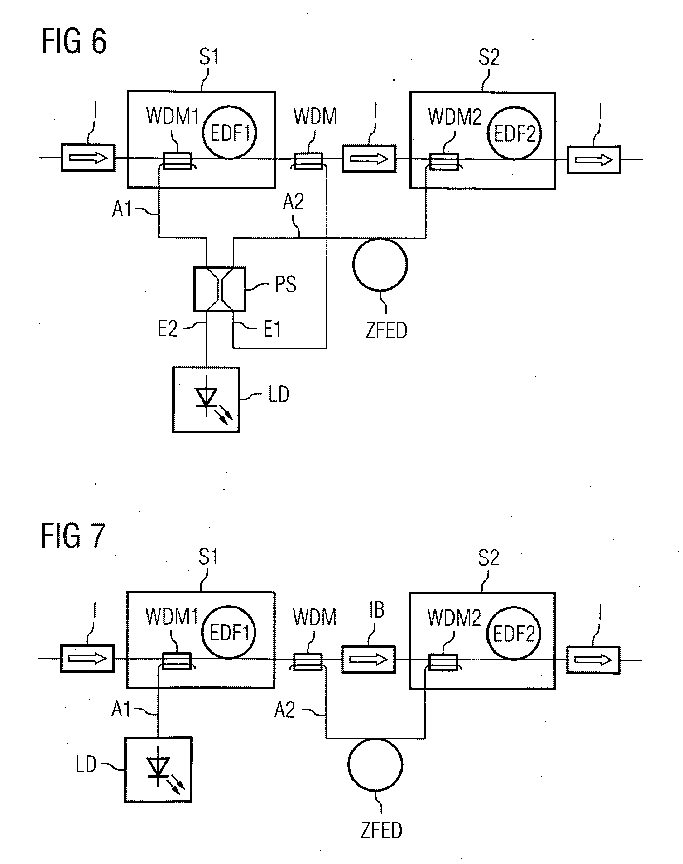

In den Figuren 6 und 7 sind zwei Ausführungsbeispiele für Pumpanordnungen von zweistufigen Faserverstärkern dargestellt, die jeweils ein leistungsabhängiges Dämpfungsglied in Form einer mit Erbium dotierten Zusatzfaser ZFED im Pumppfad zur zweiten Verstärkerstufe aufweisen.

In Fig. 6 ist das Blockschaltbild einer Pumpanordnung mit Pumpsplitter gezeigt. Im Gegensatz zu der Ausführungsvariante aus Fig. 3 wird hier der zweite Eingang des Pumpsplitters E2. zum Einfügen von nicht absorbierter Pumpleistung (engl. "residual pump power"), die auch als Restpumpsignal bezeichnet wird, genutzt. Das erste Pumpsignal A1 wird über einen ersten wellenlängenselektiven Koppler WDM1 der ersten mit Erbium dotierten Faser EDF1 zugeführt. Die Pumpleistung, welche in der Verstärkungsfaser nicht absorbiert wird, wird vom Ausgang der Verstärkungsfaser EDF1 über einen weiteren wellenlängenselektiven Koppler WDM als Restpumpleistungspegel dem Pumpsplitter PS zugeführt. Damit steht der gesamten Verstärkeranordnung mehr Pumpleistung zur Verfügung. Zusätzlich kann das fest eingestellte Teilungsverhältnis des Splitters im Vergleich zum Aufbau ohne Verwertung der Restpumpleistung geringfügig verändert werden. Insbesondere bei festgelegten Teilungsverhältnissen des Pumpsplitters, bei denen der Pumpleistungsanteil für die erste Stufe größer ist als für die zweite Stufe, wird das Verhältnis der Leistungen, die in die Verstärkungsfasern eingekoppelt werden, allein durch die Verwendung der Restpumpleistung variiert. Dadurch ist es möglich das festgelegte Teilungsverhältnis so zu wählen, dass der Pumpleistungsanteil A1, welcher der ersten Stufe zugeführt wird, angehoben wird, da der zur Erzielung der maximalen Ausgangsleistung erforderliche Pumpleistungspegel der zweiten Faser auch bei diesem veränderten Teilungsverhältnis noch bereit gestellt werden kann. Zum Beispiel kann bei einem fest eingestellten Teilungsverhältnis des Splitters PS von in etwa $(1-\alpha):\alpha = 60:40$ das Teilungsverhältnis durch die Verwendung der Restpumpleistung um einige Prozent auf Werte von ungefähr 65:35 zu Gunsten der ersten Stufe in der Designphase variiert werden. Dies bedeutet, dass im geschilderten Fall eine geringfügige Verbesserung der Rauschzahl auch ohne die ZFED erzielt werden kann. Durch Einsatz der ZFED hingegen wird die Variation des Teilungsverhältnisses zu Gunsten der ersten Stufe in jedem Fall erzielt, da die Regelung die Ausgangsleistung der Pumpquelle LD stets erhöhen wird, sobald am Ausgang der Verstärkeranordnung die Ausgangsleistung aufgrund der Reduktion des Pumpleistungspegels, der der zweiten Verstärkerstufe zugeführt wird, abfällt. Ein weiterer Vorteil der Anordnung aus Fig. 6 besteht darin, dass durch die Verwendung der Restpumpleistung die maximal auftretende Rauschzahl weiter herabgesetzt werden kann.

In Fig. 7 wurde die erfindungsgemäße mit Erbium dotierte Zusatzfaser ZFED in den Pumppfad der Pumpanordnung mit Pumpbypass aus Fig. 1b eingefügt. Ein erstes Pumpsignal A1 wird über den Pumpeingang eines ersten Kopplers WDM1 einer ersten Verstärkungsfaser EDF1 zugeführt. Dieser ist ein Koppelelement WDM nachgeschaltet, das das am Ende der Verstärkungsfaser vorhandene Signal wellenlängenselektiv in ein Datensignal und in ein Restpumpsignal aufteilt, wobei das Datensignal der weiteren Verstärkungsfaser EDF2 zugeführt wird, und das Restpumpsignal als weiteres Pumpsignal A2 über das leistungsabhängige Dämpfungsglied ZFED der weiteren Verstärkungsfaser EDF2 zugeführt wird. Auch in diesem Fall wird durch die leistungsabhängige Variation der Pumpleistung eine Reduktion der Ausgangsleistung am Ausgang der zweiten Verstärkerstufe erreicht, wodurch die Regelung die Ausgangsleistung der Pumpquelle LD erhöht und in die erste Verstärkerstufe mehr Pumpleistung eingekoppelt wird. Als Resultat wird eine geringfügige Verbesserung der Rauschzahl im Vergleich zu dem in Fig. 2 gezeigten Kurvenverlauf A festgestellt.

Bei Verstärkeranordnungen mit mehr als zwei Verstärkungsfasern ist denkbar, dass die Ausgangsleistung einer Hochleistungslaserdiode beispielsweise auf drei Verstärkungsfasern aufgeteilt wird. Wird dazu eine Pumpanordnung mit Pumpsplittern (2 auf 2-Splitter bzw. Vielfachsplitter) gewählt, so wird zur Erzielung eines optimalen Rauschverhaltens die mit Erbium dotierte Zusatzfaser ZFED bevorzugt in einem Pumppfad eingefügt, der zu einer der letzten Verstärkungsfasern führt. Die Verstärker-Funktion wird dann erneut vom Teilungsverhältnis diverser Pumpsplitter und der Länge der mit Erbium dotierten Zusatzfaser abhängen.

Für alle genannten Verstärkeranordnungen gilt, dass bei der Auslegung des Verstärkers dafür gesorgt werden muss, dass die in der Zusatzfaser erzeugte ASE nicht den Laserbetrieb stört. Bei Fabry-Pérot (FP)-Laserdioden ergibt sich kein Problem, da diese einen integrierten.Isolator besitzen. Bei Laserdioden mit Fiber Bragg Grating (FBG) dagegen muss unter Umständen ein Isolator oder eine Komponente mit wellenlängenabhängiger Dämpfung der Laserdiode nachgeschaltet werden.

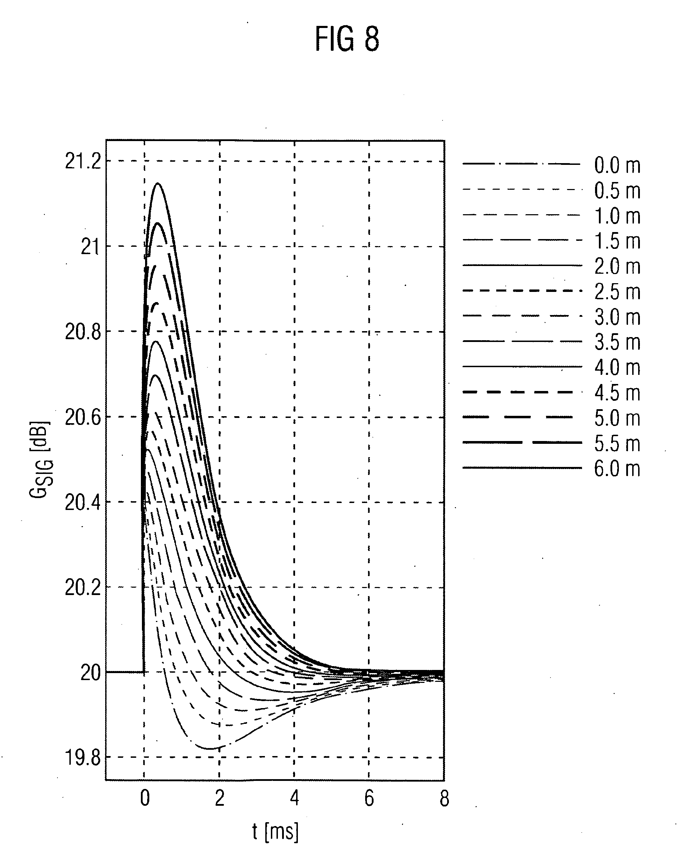

Allerdings verschlechtern sich beim Einsatz der Zusatzfaser im Pumppfad zur zweiten Stufe die dynamischen Eigenschaften des Faserverstärkers beim Zu- oder Abschalten von Kanälen, wenn eine herkömmliche Feedforward-Regelung zum Einstellen der Pumpleistung verwendet wird. In diesem Fall treten bei einem Abfall der Signaleingangsleistung von beispielsweise 16 dB am Eingang des mehrstufigen Verstärkers erhebliche Gewinnschwankungen des zu verstärkenden Signals SIG auf, was aus Fig. 8 ersichtlich wird. In Fig. 8 ist der Signalgewinn $G_{SIG}$ der Gesamtanordnung des Verstärkers für unterschiedliche Längen der Zusatzfaser zwischen 0 und 6 m in Abhängigkeit von der Zeit t aufgetragen. Je länger die Zusatzfaser ZFED ist, desto höher sind die Überschwinger des Signalgewinns. Bei großen Leistungssprüngen des Eingangssignals nimmt auch die Dauer der Überschwinger mit zunehmender Länge der Zusatzfaser zu. Um Bitfehler am Ende der Übertragungsstrecke zu verhindern, sollte sich jedoch auch für die erfindungsgemäße in Fig. 3 dargestellte Verstärkerkonfiguration der Signalgewinn beim Zu- oder Abschalten von Kanälen nicht ändern.

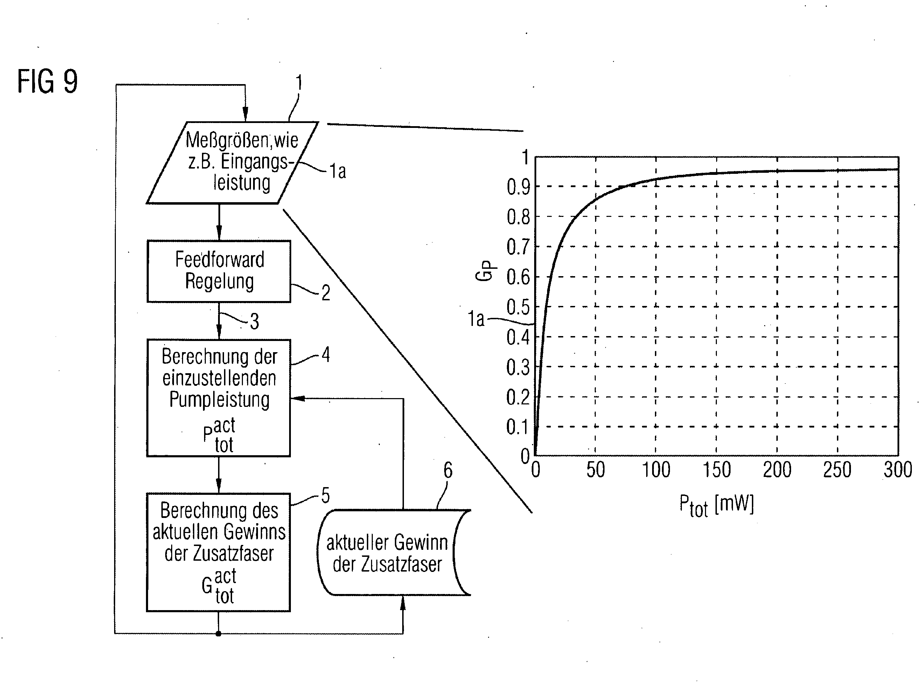

In Fig. 9 ist in seinem Flussdiagramm die Vorgehensweise pro Arbeitsschritt der modifizierten erfindungsgemäßen Feedforward-Regelung dargestellt. In diesem Ausführungsbeispiel wird angenommen, dass die Regelung von einem digitalen Signalprozessor übernommen wird, der die Pumpleistung zu diskreten Zeitpunkten einstellt. Das Verfahren kann aber auch für analoge bzw. hybride Regelungen adaptiert werden.

Zunächst wird eine Initialisierungsphase 1 durchlaufen. Dies kann beispielsweise während der Inbetriebnahme der Regelung oder während der Fertigung der Verstärkerkarte geschehen. Dazu werden sämtliche Messgrößen aufgenommen und beispielsweise Speicherplätze eines digitalen Signalprozessors mit Referenzwerten belegt. So ist unter anderem die Kenntnis des Gewinns der Zusatzfaser in Abhängigkeit von der ihr zugeführten Pumpleistung im eingeschwungenen stabilen Zustand des Faserverstärkers für den Regelungsvorgang unerlässlich. Im Inset 1a von Fig. 9 ist eine solche Pumpkennlinie der Zusatzfaser dargestellt, die den Gewinn $G_p$ entsprechend dem Verhältnis aus Pumpsignal am Ausgang der Zusatzfaser und Pumpsignal am Eingang der Zusatzfaser in Abhängigkeit vom Pumpsignal zu Beginn der Zusatzfaser kennzeichnet. Diese Messung ist am besten bereits bei der Fertigung des Verstärkers durchzuführen. In der Regel wird es auch ausreichend sein, die Kennlinie für ein Exemplar zu vermessen und als typische Kurve dann für alle später produzierten EDFAs zu verwenden. Bei der Messung wird eine beliebige Pumpleistung $P_{tot}$ des Ausgangssignals der Laserdiode eingestellt und für längere Zeit konstant gehalten. Es stellt sich ein stabiler Zustand ein. Für diesen stabilen Zustand wird für die Pumpleistung $P_{tot}$ der entsprechende Gewinnwert der Zusatzfaser $G_p$ in einen Speicherplatz geschrieben. Zu beachten ist, dass während der Messung kein Signal aus den Verstärkerstufen in die Zusatzfaser rückgestreut wird und dass die Messung erst erfolgt, wenn der eingeschwungene stabile Zustand des mehrstufigen Verstärkers erreicht wurde.

Während des Betriebs des Verstärkers, was in Fig. 9 durch den Kasten 2 repräsentiert ist, wird mittels einer Standard Feedforward-Technik ein erster Wert für das Gesamtpumpsignal $P_{tot}$ unter Annahme eines stabilen Zustands eingestellt. Der Gewinn der Zusatzfaser ist entsprechend der unter 1 genannten Kennlinie auf den stabilen Zustand eingestellt. Der zu $P_{tot}$ zugehörige Gewinnwert $G_p$ ist bereits in einem Speicherplatz hinterlegt worden. Ferner wird dieser Wert einem weiteren Speicherplatz für den aktuellen Gewinnwert der Zusatzfaser $G_p^{act}$ zugewiesen, um die Anfangsbedingungen für das Regelverfahren festzulegen. Es gilt: $G_p^{act} = G_p$. Als Beispiel sei hier von einer Gesamtpumpleistung $P_{tot} = 200$ mW ausgegangen. Für $G_p$ ergibt sich aus dem Inset 1a von Fig. 9 ein Wert von in etwa 0.95.

Tritt nun ein Leistungssprung 3 in der Signalleistung des Faserverstärkers durch Abschalten von Kanälen auf, so wird die Pumpleistung der Pumplaserdiode LD durch die Regelung angepasst und reduziert. Für diesen Fall wird in Arbeitsschritt 4 ein aktueller Leistungswert des Pumpsignals $P_{tot}^{act}$ nach folgender Vorschrift berechnet:

$$ P_{tot}^{act} = P_{tot} \cdot \frac{(1-\alpha) + \alpha \ G_p}{(1-\alpha) + \alpha \ G_p^{act}} $$

In dieser Formel bezeichnen allgemein:

$\alpha$ den der Zusatzfaser zugeführten Bruchteil der Gesamtpumpleistung (z.B. 0,2 ...0,9),

$P_{tot}$ die von der Pumplaserdiode abgegebene Gesamtpumpleistung respektive das Gesamtpumpsignal während des stabilen Zustands,

$P_{tot}^{act}$ den aktuellen Wert der Gesamtpumpleistung für die Übergangsphase annähernd nach dem Leistungssprung des Eingangssignals,

$G_p$ den Gewinnwert der Zusatzfaser, der mit der Pumpleistung $P_{tot}$ im stabilen Zustand verknüpft ist, und

$G_p^{act}$ den aktuellen Gewinnwert der Zusatzfaser, der mit der aktuellen Gesamtpumpleistung $P_{tot}^{act}$ annähernd nach der Leistungsänderung des Eingangssignals verknüpft ist.

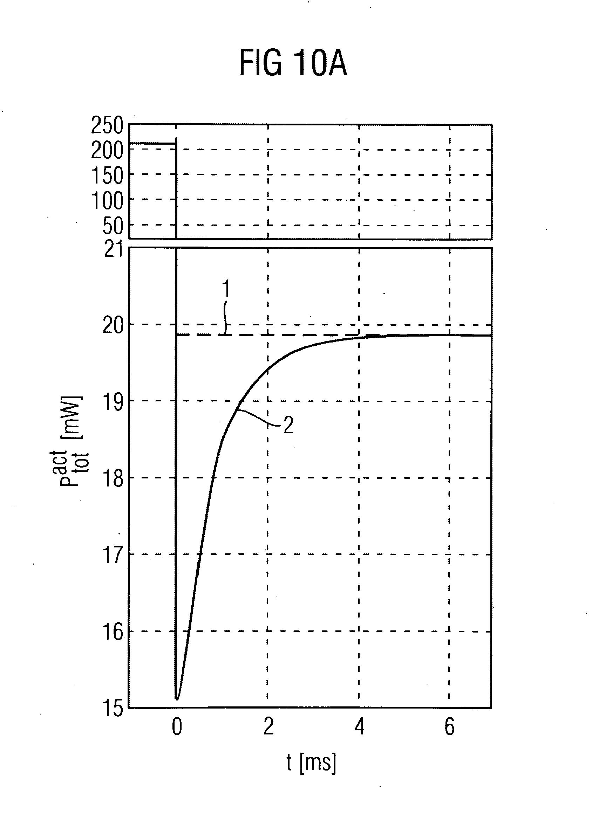

Direkt nach der Leistungsänderung des Eingangssignals werden die Größen $P_{tot}$ und $G_p$ instantan auf den Wert des neu einzustellenden stabilen Zustands gesetzt, $P_{tot}$ wird beispielsweise von 200 mW auf 20 mW und $G_p$ von 0.95 auf 0.7 (siehe Kennlinie in Inset 1a von Fig. 9) gesetzt. Allerdings wird zu Beginn des Regelungsvorgangs zunächst ein Zwischenwert des aktuellen Pumpsignals mittels obiger Formel berechnet, da der Speicher des aktuellen Gewinnwertes $G_p^{act}$ noch mit dem Gewinnwert $G_p$ des "alten" stabilen Zustands belegt ist. Der derart erhaltene aktuelle Leistungswert des Pumpsignals $P_{tot}^{act}$ entspricht demnach noch nicht dem neu einzustellenden Sollwert der Gesamtpumpleistung für den stabilen Zustand, sondern liegt in der Übergangsphase direkt mach dem Leistungssprung unter dem gewünschten Sollwert. In dem angegebenen Beispiel würde für $P_{tot}^{act}$ ungefähr ein Wert von 15,4 mW eingestellt werden. (vgl. Fig. 10a) Würde es sich statt um einen Abfall der Eingangsleistung um eine Zunahme der Eingangsleistung am Eingang des Faserverstärkers handeln, so würde der aktuelle Leistungswert des Gesamtpumpsignals $P_{tot}^{act}$ direkt nach dem Signalleistungssprung über dem Sollwert des neu einzustellenden stabilen Zustands liegen.

Die einzustellende Gesamtpumpleistung muss jedoch unter Berücksichtigung des aktuellen Gewinns der Zusatzfaser berechnet werden. Daher wird in Arbeitsschritt 5 der tatsächlich vorliegende Gewinn der Zusatzfaser $G_p^{act}$ berechnete. Zur Modellierung des Gewinns kann zum Beispiel auf die Druckschrift "Gain dynamics of doped-fiber amplifiers für added and dropped signals" von A. Bononi und L. A. Rusch, 1998 IEEE Int. Conference on Communications, Atlanta, Con. Record., Cat. No.98CH36220 zurückgegriffen werden. Diese Druckschriftt enthält mehrere Gleichungen zur Berechnung der innerhalb eines Zeitintervalls auftretenden Gewinnänderungen. Mit dem Ergebnis der Berechnungen wird der zuvor noch mit $G_p$ belegte Speicherplatz neu belegt. (Arbeitsschritt 6).

Anschließend wird nach Arbeitsschritt 4 ein neuer aktueller Leistungswert des Pumpsignals $P_{tot}^{act}$ unter Berücksichtigung des zuvor berechneten aktuellen Gewinnwertes $G_p^{act}$ der Zusatzfaser berechnet und eingestellt. Es wird dazu die oben angegebene Formel verwendet, wobei $P_{tot}$ den Leistungswert des Pumpsignals des neu einzustellenden stabilen Zustands und $G_p$ den Gewinnwert der Zusatzfaser des neu einzustellenden stabilen Zustands bezeichnet. Die Berechnung und Einstellung des aktuellen Gewinnwertes $G_p^{act}$ und des aktuellen Leistungswerts des Pumpsignals $P_{tot}^{act}$ wird solange fortgesetzt, bis der aktuelle Leistungswert des Gesamtpumpsignals $P_{tot}^{act}$ mit dem neuen Sollwert des Gesamtpumpsignals $P_{tot}$ für den neu einzustellenden stabilen Zustand übereinstimmt.

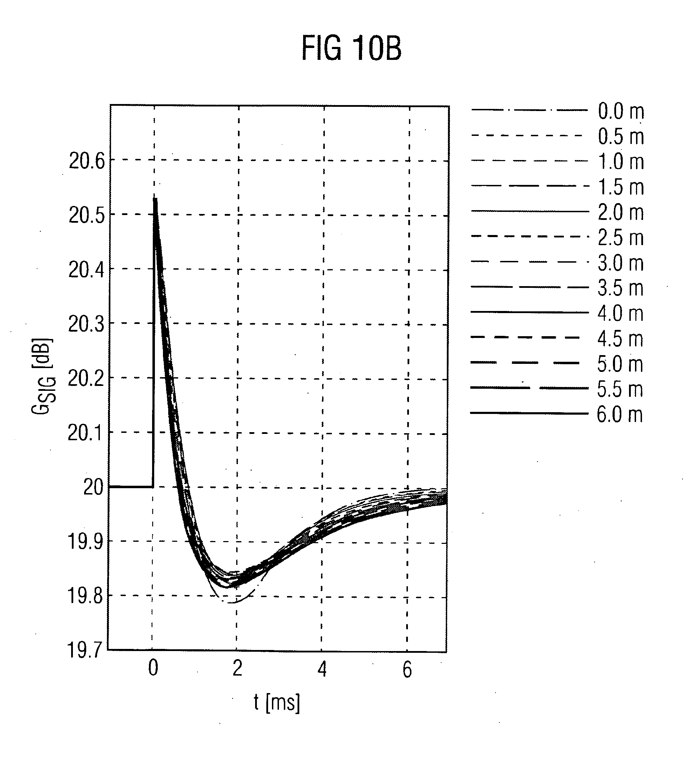

Die Vorteile der erfindungsgemäßen Feedforward-Regelung sind anhand der Figuren 10a und 10b erkennbar. In Fig. 10a ist die Zeitabhängigkeit der Gesamtpumpleistung $P_{tot}^{act}$ dargestellt. Die gestrichelte Kurve 1 zeigt den Verlauf der Gesamtpumpleistung bei Verwendung eines Standard-Feedforward-Verfahrens. Die durchgezogene Kurve 2 zeigt den Verlauf der Gesamtpumpleistung bei Verwendung des erfindungsgemäßen Feedforward-Verfahrens mit der oben beschriebenen Korrekturrechnung. Bei einer sprunghaften Änderung der in die Zusatzfaser eingekoppelten Leistungen zum Zeitpunkt 0 ist mit dem erfindungsgemäßen Verfahren eine Näherungslösung gegeben, nach der das Reservoir und damit auch die mittlere Besetzungswahrscheinlichkeit des metastabilen Niveaus der Erbium-Atome in der Zusatzfaser sich asymptotisch einem Endwert nach einem Exponentialgesetz annähern. Im Falle einer sprunghaften Abnahme der Signaleingangsleistung zum Zeitpunkt 0 ergibt sich die in Fig. 10a gezeigte Kurve 2.

In Fig. 10b ist der Verlauf des Signalgewinns $G_{SIG}$ der Gesamtanordnung als Funktion der Zeit für unterschiedliche Längen der Zusatzfaser zwischen 0 und 6 m aufgetragen. Im Gegensatz zu Fig. 8 wurde hier das erfindungsgemäße Feedforward-Verfahren eingesetzt. Es zeigt sich, dass sich die Höhe der Überschwinger signifikant reduziert. Auch ist bis zu einer Länge der Zusatzfaser von 6 m keine Längenabhängigkeit des Gewinnverlaufs mehr festzustellen. Die Ergebnisse zeigen, dass das Einfügen der Zusatzfaser im Pumppfad in Kombination mit der modifizierten Feedforward-Regelung zu keinen nennenswerten Veränderungen des dynamischen Verhaltens führt. Dies bedeutet, dass mittels der erfindungsgemäßen Feedforward-Regelung die Auswirkungen der Zusatzfaser annähernd komplett kompensiert werden. Damit ist eine Verbesserung der Rauschzahl bei kleinen Signaleingangsleistungen ohne negativen Einfluss auf die Dynamik möglich.

**Patentansprüche**

1. Mehrstufiger Faserverstärker,
   der eine erste Verstärkungsfaser (EDF1) und mindestens eine in Serie geschaltete weitere Verstärkungsfaser (EDF2) sowie eine Pumpquelle (LD) aufweist, wobei ein erstes Pumpsignal (A1) der ersten Verstärkungsfaser (EDF1) zugeführt wird und ein weiteres Pumpsignal (A2) der weiteren Verstärkungsfaser (EDF2) zugeführt wird,
   **dadurch gekennzeichnet,**
   **dass** zudem ein leistungsabhängiges Dämpfungsglied (ZFED) vorgesehen ist, über das der weiteren Verstärkungsfaser (EDF2) das weitere Pumpsignal (A2) zugeführt wird, wobei das Dämpfungsglied (ZFED) derart ausgebildet ist, dass mit zunehmender Pumpleistung **die Dämpfung des weiteren Pumpsignals (A2) abnimmt.**

2. Mehrstufiger Faserverstärker nach Anspruch 1,
   **dadurch gekennzeichnet,**
   **dass** der ersten Verstärkungsfaser (EDF1) ein Koppelelement (WDM) nachgeschaltet ist, das ein am Ende der Verstärkungsfaser (EDF1) vorhandenes Signal wellenlängenselektiv in ein Datensignal und in ein Restpumpsignal aufteilt, wobei das Datensignal der weiteren Verstärkungsfaser (EDF2) zugeführt wird, und das Restpumpsignal als weiteres Pumpsignal (A2) über das leistungsabhängige Dämpfungsglied (ZFED) der weiteren Verstärkungsfaser (EDF2) zugeführt wird.

3. Mehrstufiger Faserverstärker nach Anspruch 1,
   **dadurch gekennzeichnet,**
   **dass** der Pumpquelle (LD) ein Splitter (PS) nachgeschaltet ist, der die Pumpleistung der Pumpquelle (LD) aufteilt, und das erste Pumpsignal (A1) der ersten Verstärkungsfaser (EDF1) zuführt und das weitere Pumpsignal (A2) über das leistungsabhängige Dämpfungsglied (ZFED) der weiteren Verstärkungsfaser (EDF2) zuführt.

4. Mehrstufiger Faserverstärker nach Anspruch 3, **dadurch gekennzeichnet,**
**dass** der ersten Verstärkungsfaser (EDF1) ein Koppelelement (WDM) nachgeschaltet ist, das ein am Ende der Verstärkungsfaser (EDF1) vorhandenes Signal wellenlängenselektiv in ein Datensignal und in ein Restpumpsignal aufteilt, wobei das Datensignal der weiteren Verstärkungsfaser (EDF2) zugeführt wird, und das Restpumpsignal einem weiteren Eingang (E2) des Splitters (PS) zugeführt wird.

5. Mehrstufiger Faserverstärker nach Anspruch 1, 3 und 4
**dadurch gekennzeichnet,**
**dass** zur Aufteilung der Pumpleistung mehrere Splitter (PS) vorgesehen sind oder ein Vielfachsplitter vorgesehen ist, die die Pumpleistung in mehrere Pumpsignale (A1, A2, ...) aufteilen, die mehreren Verstärkungsfasern (EDF1, EDF2, ...) zugeführt werden.

6. Mehrstufiger Faserverstärker nach Anspruch 5, **dadurch gekennzeichnet,**
**dass** im Fall von mehr als zwei Verstärkungsfasern das leistungsabhängige Dämpfungsglied (ZFED) Pumpeingängen der zuletzt angeordneten Verstärkungsfasern vorgeschaltet ist.

7. Mehrstufiger Faserverstärker nach einem der vorhergehenden Ansprüche,
**dadurch gekennzeichnet,**
**dass** es sich bei dem leistungsabhängigen Dämpfungsglied (ZFED) um eine Faser handelt, die mit einem Element aus der Gruppe der Seltenen Erden dotiert ist.

8. Mehrstufiger Faserverstärker nach einem der vorhergehenden Ansprüche,
**dadurch gekennzeichnet,**
**dass** die Länge oder Dotierung der mit einem Element aus der Gruppe der Seltenen Erden dotierten Faser im Hinblick auf Rauschzahl und Ausgangsleistung des Faserverstärkers optimiert ist.

9. Verfahren zur Anpassung einer Pumpleistung eines mehrstufigen Faserverstärkers,
in dem ein optisches Signal (SIG) verstärkt wird, und der eine erste Verstärkungsfaser (EDF1) und mindestens eine in Serie geschaltete weitere Verstärkungsfaser (EDF2) enthält, und
bei dem **ein erstes Pumpsignal (A1)** aus einer Pumpquelle (LD) **der ersten Verstärkungsfaser (EDF1) und ein weiteres Pumpsignal (A2) aus**

**der genannten Pumquelle (LD) der weiteren Verstärkungsfaser (EDF2)** zugeführt werden, und eine Regelung verwendet wird, die nach einer am Verstärkereingang detektierten Änderung der Eingangsleistung (Pin) des Signals (SIG) einen neuen Sollwert **eines** Gesamtpumpsignals ($P_{tot}$) berechnet und einstellt, so dass der Gewinn des Signals (SIG) möglichst konstant bleibt,
**dadurch gekennzeichnet,**
**dass** der Anteil (A2) des Gesamtpumpsignals ($P_{tot}$) der weiteren Verstärkungsfaser (EDF2) über eine Zusatzfaser (ZFED) mit leistungsabhängiger Dämpfung zugeführt wird, die mit zunehmender Pumpleistung des Gesamtpumpsignals ($P_{tot}$) das **weitere Pumpsignal (A2)** aus der genannten Pumquelle (LD) **weniger stark dämpft,** und
**dass** nach einer Leistungsänderung des Signals (SIG) ein aktueller Leistungswert des Gesamtpumpsignals ($P_{tot}^{act}$) schlagartig bis über oder unter seinen neuen Sollwert ($P_{tot}$) hinaus geändert wird und dann asymptotisch dem neuen Sollwert des Gesamtpumpsignals ($P_{tot}$) angenähert wird.

10. Verfahren nach Anspruch 9,
**dadurch gekennzeichnet,**

- **dass** im stabilen Zustand des Faserverstärkers ein Leistungswert des Gesamtpumpsignals ($P_{tot}$) und ein zugehöriger Gewinnwert ($G_p$) der Zusatzfaser (ZFED) gespeichert werden,

- **dass** ein aktueller Gewinnwert ($G_p^{act}$) der Zusatzfaser mit dem Gewinnwert ($G_p$) des stabilen Zustands gleichgesetzt wird,
- **dass** nach einer Leistungsänderung des optischen Signals (SIG) ein Zwischenwert des Gesamtpumpsignals (PZW) unter Berücksichtigung des Leistungswerts des Gesamtpumpsignals ($P_{tot}$) und des Gewinnwertes ($G_p$) des neu einzustellenden stabilen Zustands und unter Berücksichtigung von ($G_p^{act}$) berechnet und eingestellt wird,

- **dass** ein neuer aktueller Gewinnwert ($G_p^{act}$) der Zusatzfaser berechnet und gespeichert wird,
- **dass** ein neuer aktueller Leistungswert des Gesamtpumpsignals ($P_{tot}^{act}$) unter Berücksichtigung des zuvor berechneten aktuellen Gewinnwertes ($G_p^{act}$) der Zusatzfaser und un-

ter Berücksichtigung des Leistungswerts des Gesamtpumpsignals ($P_{tot}$) und des Gewinnwertes ($G_p$) des neu einzustellenden stabilen Zustands berechnet und eingestellt wird,
- **dass** die Berechnung und Einstellung des aktuellen Gewinnwertes ( $G_p^{act}$ ) und des aktuellen Leistungswerts des Gesamtpumpsignals ( $P_{tot}^{act}$ ) solange fortgesetzt werden, bis der aktuelle Leistungswert des Gesamtpumpsignals ( $P_{tot}^{act}$ ) mit dem neuen Sollwert des Gesamtpumpsignals ($P_{tot}$) für den neu einzustellenden stabilen Zustand übereinstimmt.

11. Verfahren nach Anspruch 10,
**dadurch gekennzeichnet,**
**dass** der aktuelle Leistungswert des Gesamtpumpsignals ( $P_{tot}^{act}$ ) annähernd nach der Leistungsänderung nach folgender Formel berechnet wird:

$$P_{tot}^{act} = P_{tot} \cdot \frac{(1-\alpha) + \alpha\, G_p}{(1-\alpha) + \alpha\, G_p^{act}} ,$$

in der

$\alpha$ den der Zusatzfaser zugeführten Bruchteil des Gesamtpumpsignals bezeichnet und
$P_{tot}$ den Leistungswert des Gesamtpumpsignals des neu einzustellenden stabilen Zustands bezeichnet und
$G_p$ den Gewinnwert der Zusatzfaser des neu einzustellenden stabilen Zustands bezeichnet und

$G_p^{act}$ einen aktuellen Gewinnwert der Zusatzfaser annähernd nach der Leistungsänderung bezeichnet.

12. Verfahren nach den Ansprüchen 10 und 11
**dadurch gekennzeichnet,**
**dass** der zu einem aktuellen Leistungswert des Gesamtpumpsignals ( $P_{tot}^{act}$ ) gehörige aktuelle Gewinnwert ( $G_p^{act}$ ) der Zusatzfaser nach einem Modell von Bononi et al. berechnet wird.

13. Mehrstufiger Faserverstärker,
mit einer Pumpquelle (LD), deren Gesamtpumpsignal ($P_{tot}$) auf eine erste Verstärkungsfaser (EDF1) und mindestens eine weitere in Serie geschaltete Verstärkungsfaser (EDF2) verteilt ist,
mit einer Regelung, in der nach einer am Verstärkereingang detektierten Änderung der Leistung (Pin) eines Signals (SIG) ein neuer Sollwert des Gesamtpumpsignals ($P_{tot}$) berechnet und eingestellt ist,
**dadurch gekennzeichnet,**
**dass** eine Zusatzfaser (ZFED) mit leistungsabhängiger Dämpfung vorgesehen ist, über die ein Anteil des Gesamtpumpsignals ($P_{tot}$) der weiteren Verstärkungsfaser (EDF2) zugeführt ist, und
**dass** die Regelung gemäß der Ansprüche 10, 11 oder 12 ausgestaltet ist.

**Claims**

1. Multistage fiber amplifier,
having a first amplifying fiber (EDF1) and at least one further amplifying fiber (EDF2) connected in series and also one pump source (LD), a first pump signal (A1) being fed to the first amplifying fiber (EDF1) and a further pump signal (A2) being fed to the further amplifying fiber (EDF2),
**characterized**
**in that** a power-dependent attenuation element (ZFED) is furthermore provided, via which the further pump signal (A2) is fed to the further amplifying fiber (EDF2), the attenuation element (ZFED) being formed in such a way that, as the pump power increases, the attenuation of the further pump signal (A2) decreases.

2. Multistage fiber amplifier according to Claim 1,
**characterized**
**in that** a coupling element (WDM) is connected downstream of the first amplifying fiber (EDF1), which coupling element splits a signal present at the end of the amplifying fiber (EDF1) wavelength-selectively into a data signal and into a residual pump signal, the data signal being fed to the further amplifying fiber (EDF2), and the residual pump signal being fed as further pump signal (A2) to the further amplifying fiber (EDF2) via the power-dependent attenuation element (ZFED).

3. Multistage fiber amplifier according to Claim 1,
**characterized**
**in that** a splitter (PS) is connected downstream of the pump source (LD) which splitter splits the pump power of the pump source (LD), and feeds the first pump signal (A1) to the first amplifying fiber EDF1 and feeds the further pump signal (A2) to the further amplifying fiber (EDF2) via the power-dependent attenuation element (ZFED).

4. Multistage fiber amplifier according to Claim 3,
**characterized**
**in that** a coupling element (WDM) is connected downstream of the first amplifying fiber (EDF1), which coupling element splits a signal present at the end of the amplifying fiber (EDF1) wavelength-selectively into a data signal and into a residual pump signal, the data signal being fed to the further amplifying fiber (EDF2), and the residual pump signal being fed to a further input (E2) of the splitter (PS).

**5.** Multistage fiber amplifier according to Claims 1, 3 and 4,
**characterized**
**in that**, for splitting the pump power, a plurality of splitters (PS) are provided or a multiple splitter is provided, by which the pump power is split into a plurality of pump signals (A1, A2, ...) that are fed to a plurality of amplifying fibers (EDF1, EDF2, ...) .

**6.** Multistage fiber amplifier according to Claim 5,
**characterized**
**in that**, in the case of more than two amplifying fibers, the power-dependent attenuation element (ZFED) is connected upstream of pump inputs of the amplifying fibers arranged last.

**7.** Multistage fiber amplifier according to one of the preceding claims,
**characterized**
**in that** the power-dependent attenuation element (ZFED) is a fiber doped with an element from the group of rare earths.

**8.** Multistage fiber amplifier according to one of the preceding claims,
**characterized**
**in that** the length or doping of the fiber doped with an element from the group of rare earths is optimized with regard to noise figure and output power of the fiber amplifier.

**9.** Method for adapting a pump power of a multistage fiber amplifier,
in which an optical signal (SIG) is amplified, and which contains a first amplifying fiber (EDF1) and at least one further amplifying fiber (EDF2) connected in series, and
in which a first pump signal (A1) from a pump source (LD) is fed to the first amplifying fiber (EDF1) and a further pump signal (A2) from said pump source (LD) is fed to the further amplifying fiber (EDF2), and
a control is used which, after a change in the input power (Pin) of the signal (SIG) that has been detected at the amplifier input calculates and sets a new desired value of a total pump signal ($P_{tot}$), such that the gain of the signal (SIG) remains as far as possible constant,
**characterized**
**in that** the portion (A2) of the total pump signal ($P_{tot}$) is fed to the further amplifying fiber (EDF2) via an additional fiber (ZFED) with power-dependent attenuation, which, as the pump power of the total pump signal ($P_{tot}$) increases, attenuates the further pump signal (A2) from said pump source (LD) to a lesser extent, and
**in that**, after a change in the power of the signal (SIG), a present power value of the total pump signal ($P_{tot}^{act}$) is changed abruptly to in excess of or less than its new desired value ($P_{tot}$) and is then approximated asymptotically to the new desired value of the total pump signal ($P_{tot}$).

**10.** Method according to Claim 9,
**characterized**

- **in that** a power value of the total pump signal ($P_{tot}$) and an associated gain value ($G_p$) of the addition fiber (ZFED) are stored in the stable state of the fiber amplifier,

- **in that** a present gain value ($G_p^{act}$) of the additional fiber is equated with the gain value ($G_p$) of the stable state,

- **in that**, after a change in the power of the optical signal (SIG), an intermediate value of the total pump signal (PZW) is calculated and set taking account of the power value of the total pump signal ($P_{tot}$) and the gain value ($G_p$) of the stable state that is to be newly set and taking account of ($G_p^{act}$) ,

- **in that** a new present gain value ($G_p^{act}$) of the additional fiber is calculated and stored,
- **in that** a new present power value of the total pump signal ($P_{tot}$) is calculated and set taking account of the previously calculated present gain value ($G_p^{act}$) of the additional fiber and taking account of the power value of the total pump signal ($P_{tot}$) and the gain value ($G_p$) of the stable state that is to be newly set,
- **in that** the calculation and setting of the present gain value ($G_p^{act}$) and of the present power value of the total pump signal ($P_{tot}^{act}$) are continued until the present power value of the total pump signal ($P_{tot}^{act}$) corresponds to the new desired value of the total pump signal ($P_{tot}$) for the stable state that is to be newly set.

**11.** Method according to Claim 10,
**characterized**
**in that** the present power value of the total pump

signal ( $P_{tot}^{act}$ ) is calculated approximately after the power change according to the following formula:

$$P_{tot}^{act} = P_{tot} \cdot \frac{(1-\alpha) + \alpha \, G_p}{(1-\alpha) + \alpha \, G_p^{act}} \, ,$$

in which

$\alpha$ denotes that fraction of the total pump signal which is fed to the additional fiber;

$P_{tot}$ denotes the power value of the total pump signal of the stable state that is to be newly set, and

$G_p$ denotes the gain value of the additional fiber of the stable state that is to be newly set, and

$G_p^{act}$ denotes a present gain value of the additional fiber approximately after the power change.

12. Method according to Claims 10 and 11, **characterized**

in that the present gain value ( $G_p^{act}$ ) of the additional fiber that is associated with the present power value of the total pump signal ( $P_{tot}^{act}$ ) is calculated according to a model by Bononi et al.

13. Multistage fiber amplifier,
having a pump source (LD), the total pump signal ($P_{tot}$) of which is distributed between a first amplifying fiber (EDF1) and at least one further amplifying fiber (EDF2) connected in series, having a control in which, after a change in the power (Pin) of a signal (SIG) that has been detected at the amplifier input, a new desired value of the total pump signal ($P_{tot}$) is calculated and set,
**characterized**
in that an additional fiber (ZFED) with power-dependent attenuation is provided, via which a portion of the total pump signal ($P_{tot}$) is fed to the further amplifying fiber (EDF2), and
in that the control is configured in accordance with Claims 10, 11 or 12.

## Revendications

1. Amplificateur à fibres à plusieurs étages,
qui comprend une première fibre d'amplification (EDF1) et au moins une deuxième fibre d'amplification (EDF2) connectée en série ainsi qu'une source de pompe (LD), un premier signal de pompe (A1) étant amené à la première fibre d'amplification (EDF1) et un deuxième signal de pompe (A2) étant amené à la deuxième fibre d'amplification (EDF2), **caractérisé**
**en ce que**, en outre, on prévoit un atténuateur (ZFED) dépendant de la puissance par le biais duquellequel le deuxième signal de pompe (A2) est amené à la deuxième fibre d'amplification (EDF2), l'atténuateur (ZFED) étant exécuté de manière à ce que l'atténuation du deuxième signal de pompe (A2) diminue à mesure que la puissance de pompage augmente.

2. Amplificateur à fibres à plusieurs étages selon la revendication 1, **caractérisé**
**en ce qu'**un élément de couplage (WDM) est connecté derrièreen aval de la première fibre d'amplification (EDF1), lequel élément de couplage partage un signal présent à l'extrémité de la fibre d'amplification (EDF1) en en un signal de données et en un signal de pompe résiduel de manière sélective en fonction de la longueur d'onde, le signal de données étant amené à la deuxième fibre d'amplification (EDF2) et le signal de pompe résiduel étant amené à la deuxième fibre d'amplification (EDF2) en tant que deuxième signal de pompe (A2) par le biais de l'atténuateur (ZFED) dépendant de la puissance.

3. Amplificateur à fibres à plusieurs étages selon la revendication 1,
**caractérisé**
**en ce qu'**un répartiteurséparateur (PS) est connecté derrièreen aval de la source de pompe (LD), lequel répartiteurséparateur partage la puissance de pompage de la source de pompe (LD) et amène le premier signal de pompe (A1) à la première fibre d'amplification (EDF1) et amène le deuxième signal de pompe (A2) à la deuxième fibre d'amplification (EDF2) par le biais de l'atténuateur (ZFED) dépendant de la puissance.

4. Amplificateur à fibres à plusieurs étages selon la revendication 3,
**caractérisé**
**en ce qu'**un élément de couplage (WDM) est connecté derrièreen aval de la première fibre d'amplification (EDF1), lequel élément partage un signal présent à l'extrémité de la fibre d'amplification (EDF1) en un signal de données et en un signal de pompe résiduel de manière sélective en fonction de la longueur d'onde, le signal de données étant amené à la deuxième fibre d'amplification (EDF2) et le signal de pompe résiduel étant amené à une deuxième entrée (E2) du répartiteurséparateur (PS).

5. Amplificateur à fibres à plusieurs étages selon les revendications 1, 3 et 4,
**caractérisé**

**en ce que**, pour partager la puissance de pompage, on prévoit plusieurs répartiteurséparateurs (PS) ou un répartiteurséparateur multiple qui partagent la puissance de pompage en plusieurs signaux de pompe (A1, A2, ...) qui sont amenés à plusieurs fibres d'amplification (EDF1, EDF2, ...).

6. Amplificateur à fibres à plusieurs étages selon la revendication 5,
**caractérisé**
**en ce que**, dans le cas où il y a plus de deux fibres d'amplification, l'atténuateur (ZFED) dépendant de la puissance est connecté avanten amont dles entrées de pompe des fibres d'amplification situées en dernier.

7. Amplificateur à fibres à plusieurs étages selon l'une des revendications précédentes,
**caractérisé**
**en ce que** l'atténuateur (ZFED) dépendant de la puissance est une fibre qui est dopée par un élément du groupe des terres rares.

8. Amplificateur à fibres à plusieurs étages selon l'une des revendications précédentes,
**caractérisé**
**en ce que** la longueur ou le dopage de la fibre dopée par un élément du groupe des terres rares est optimisé(e) du point de vue du facteur de bruit et de la puissance de sortie de l'amplificateur à fibres.

9. Procédé d'adaptation d'une puissance de pompage d'un amplificateur à fibres à plusieurs étages, dans lequel un signal optique (SIG) est amplifié et qui comprend une première fibre d'amplification (EDF1) et au moins une deuxième fibre d'amplification (EDF2) connectée en série et dans lequel une premier signal de pompe (A1) provenant d'une source de pompe (LD) est amené à la première fibre d'amplification (EDF1) et un deuxième signal de pompe (A2) provenant de la source de pompe (LD) mentionnée est amené à la deuxième fibre d'amplification (EDF2) et on utilise une régulation qui, après une modification de la puissance d'entrée (Pin) du signal (SIG) détectée à l'entrée de l'amplificateur, calcule et règle une nouvelle valeur de consigne d'un signal de pompe total (P$_{tot}$) de manière à ce que le gain du signal (SIG) reste le plus constant possible,
**caractérisé**
**en ce que** la composante (A2) du signal de pompe total (P$_{tot}$) est amenée à la deuxième fibre d'amplification (EDF2) par le biais d'une fibre supplémentaire (ZFED) à atténuation dépendante de la puissance qui atténue le deuxième signal de pompe (A2) provenant de la source de pompe (LD) mentionnée avec moins de force à mesure que la puissance de pompage du signal de pompe total (P$_{tot}$) augmente
et
**en ce que**, après une modification de la puissance du signal (SIG), une valeur de puissance actuelle du signal de pompe total $\left( \mathrm{P}_{tot}^{act} \right)$ est modifiée brusquement jusqu'à une valeur supérieure ou inférieure à sa nouvelle valeur de consigne (P$_{tot}$), puis est rapprochée par approximation asymptotique de la nouvelle valeur de consigne du signal de pompe total (P$_{tot}$).

10. Procédé selon la revendication 9,
**caractérisé**

- **en ce que**, à l'état stable de l'amplificateur à fibres, une valeur de puissance du signal de pompe total (P$_{tot}$) et une valeur de gain correspondante (G$_p$) de la fibre supplémentaire (ZFED) sont enregistrées,

- **en ce qu'**une valeur de gain actuelle $\left( \mathrm{G}_p^{act} \right)$ de la fibre supplémentaire est égalée à la valeur de gain (G$_p$) de l'état stable,

- **en ce que**, après une modification de la puissance du signal optique (SIG), une valeur intermédiaire du signal de pompe total (PZW) est calculée et réglée en tenant compte de la valeur de puissance du signal de pompe total (P$_{tot}$) et de la valeur de gain (G$_p$) du nouvel état stable à régler et en tenant compte de $\left( \mathrm{G}_p^{act} \right)$,

- **en ce qu'**une nouvelle valeur de gain actuelle $\left( \mathrm{G}_p^{act} \right)$ de la fibre supplémentaire est calculée et enregistrée,

- **en ce qu'**une nouvelle valeur de puissance actuelle du signal de pompe total (P$_{tot}$) est calculée et réglée en tenant compte de la valeur de gain actuelle $\left( \mathrm{G}_p^{act} \right)$ précédemment calculée de la fibre supplémentaire et en tenant compte de la valeur de puissance du signal de pompe total (P$_{tot}$) et de la valeur de gain (G$_p$) du nouvel état stable à régler,

- **en ce que** le calcul et le réglage de la valeur de gain actuelle $\left( \mathrm{G}_p^{act} \right)$ et de la valeur de puissance actuelle du signal de pompe total $\left( \mathrm{P}_{tot}^{act} \right)$ se poursuivent jusqu' à ce que la valeur de puissance actuelle du signal de pompe total $\left( \mathrm{P}_{tot}^{act} \right)$ corresponde à la nouvelle valeur de consigne du signal de pompe total (P$_{tot}$) pour le

nouvel état stable à régler.

**11.** Procédé selon la revendication 10,
**caractérisé**
**en ce que** la valeur de puissance actuelle du signal de pompe total $(P_{tot}^{act})$ est calculée par approximativemention, après la modification de puissance, selon la formule suivante :

$$P_{tot}^{act} = P_{tot} \cdot \frac{(1-\alpha)+\alpha G_p}{(1-\alpha)+\alpha G_p^{act}} ,$$

dans laquelle

$\alpha$ désigne la fraction du signal de pompe total amenée à la fibre supplémentaire et
$P_{tot}$ désigne la valeur de puissance du signal de pompe total du nouvel état stable à régler et
$G_p$ désigne la valeur de gain de la fibre supplémentaire du nouvel état stable à régler et

$G_p^{act}$ désigne une valeur de gain actuelle de la fibre supplémentaire approximativement après la modification de puissance.

**12.** Procédé selon les revendications 10 et 11,
**caractérisé**
**en ce que** la valeur de gain actuelle $(G_p^{act})$ de la fibre supplémentaire correspondant à une valeur de puissance actuelle du signal de pompe total $(P_{tot}^{act})$ est calculée selon un modèle de Bononi et al.

**13.** Amplificateur à fibres à plusieurs étages, comprenant une source de pompe (LD) dont le signal de pompe total ($P_{tot}$) est réparti sur une première fibre d'amplification (EDF1) et au moins une deuxième fibre d'amplification (EDF2) connectée en série, comprenant une régulation dans laquelle une nouvelle valeur de consigne du signal de pompe total ($P_{tot}$) est calculée et réglée après une modification de la puissance (Pin) d'un signal (SIG) détectée à l'entrée de l'amplificateur,
**caractérisé**
**en ce que** l'on prévoit une fibre supplémentaire (ZFED) à atténuation dépendante de la puissance, par le biais de laquelle une composante portion du signal de pompe total ($P_{tot}$) est amenée à la deuxième fibre d'amplification (EDF2) et
**en ce que** la régulation est configurée selon les revendications 10, 11 ou 12.

## FIG 1A

## FIG 1B

FIG 2

## FIG 3

FIG 4A

FIG 4B

FIG 4C

# FIG 5

FIG 6

S1

WDM1   EDF1   WDM

S2

WDM2   EDF2

A1

A2

PS

E2   E1

ZFED

LD

FIG 7

S1

WDM1   EDF1   WDM   IB

S2

WDM2   EDF2

A1

LD

A2

ZFED

# FIG 8

FIG 9

# FIG 10A

# FIG 10B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5430572 A

- EP 0650234 A1

**In der Beschreibung aufgeführte Nicht-Patentliteratur**

- **A. Bononi ; L. A. Rusch.** Gain dynamics of doped-fiber amplifiers für added and dropped signals. *IEEE Int. Conference on Communications, Atlanta,* 1998